# EUROPEAN PATENT APPLICATION

(11) **EP 1 241 744 A1**
(43) Date of publication of application: **18.09.2002**
(21) Application number: 01440062.6
(22) Date of filing: 12.03.2001
(51) Int. Cl.: H01S 3/067

(54) **Double-clad optical fiber and fiber amplifier**

(71) Applicant: ALCATEL, 75008 Paris (FR)
(72) Inventor: Bayart, Dominique, 92140 Clamart (FR); Leplingard, Florence, 78000 Versailles (FR); Gasca, Laurent, 91140 Villebon sur Yvette (FR)
(74) Representative: Urlichs, Stefan, Dipl.-Phys.

(57) **Abstract**

A fiber amplifier comprises an amplifying double-clad fiber (DCF). The fiber has a core having a first refractive index, an inner cladding surrounding the core and having a second refractive index lower than the first refractive index and an outer cladding surrounding the inner cladding. The core is doped with Erbium (Er) and co-doped with Ytterbium (Yb), and further co-doped with Cerium (Ce). The Ytterbium (Yb) enables pump energy transfer from Ytterbium (Yb) ions being in the excited state to Erbium (Er) ions being in the ground state (⁴I_{15/2}). The Cerium enables a resonant energy transfer between the Erbium (Er) excited state (⁴I_{11/2})and Cerium (Ce) ground state (⁴F_{7/2}). This leads to a lower population of the Erbium ⁴I_{11/2} state and thereby increases energy transfer from Ytterbium to Erbium.

## Description

### FIELD OF THE INVENTION

The invention relates to optical fibers and, more specifically, to double-clad optical fibers, particularly as they are used in cladding-pumped optical fiber amplifiers.

### DESCRIPTION OF THE RELATED ART

An optical amplifier is a device that increases the amplitude of an input optical signal fed thereto. If the optical signal at the input to such an amplifier is monochromatic, the output will also be monochromatic, with the same frequency. A conventional fiber amplifier comprises a gain medium, such as a glass fiber core doped with an active material, typically with one or more rare-earth elements, into which is coupled to an input signal. Excitation occurs from the absorption of optical pumping energy by the core. The optical pumping energy is within the absorption band of the active material in the core, and when the optical signal propagates through the core, the absorbed pump energy causes amplification of the signal transmitted through the fiber core by stimulated emission. Optical amplifiers are typically used in a variety of applications including but not limited to amplification of weak optical pulses such as those that have traveled through a long length of optical fiber in communication systems.

One typical example of a fiber amplifier is referred to as an Erbium-doped fiber amplifier, and includes a silica fiber having a single-mode core doped with erbium (specifically doped with erbium ions conventionally denoted as Er³⁺). It is well known that an erbium optical fiber amplifier operating in its standard so-called three level mode is capable, when pumped at a wavelength of 980 nanometers (nm), of amplifying optical signals having a wavelength of 1550 nm. Since 1550 nm is the lowest loss wavelength of conventional single-mode silica glass fibers, erbium amplifiers are well suited for inclusion in fiber systems that propagate signals having wavelengths around 1550 nm.

In certain applications, particularly high-power ones, it may be desirable to provide optical amplification using a double-clad fiber. A typical double-clad fiber has an inner core, through which an optical signal is transmitted, an inner cladding surrounding the core that is of lower refractive index than the core, and an outer cladding surrounding the inner cladding that has a lower refractive index than the inner cladding. When using a double-clad fiber for optical amplification, it is known that the optical pumping energy need not be coupled directly into the core, where it will be absorbed for amplification purposes, but may be coupled into the inner cladding, where it propagates in various reflective trajectories through the cladding until it intersects the core. Once contacting the core, pump energy is absorbed and provides stored energy in the core for stimulated emission amplification of the optical signal. Such a double-clad fiber amplifier is known from US 6,157,763.

Also known from US 6,157,763 is that the core may de doped with Erbium (Er) and co-doped with Ytterbium (Yb). With Ytterbium co-doping, it is possible to pump the fiber core at a wavelength of 975nm thereby exciting the Yb Ions which then transfer energy to the ⁴I_{11/2} state of Erbium.

A problem associated with pumping of Er/Yb double-clad fibers is, that energy transfer from Yb to Er is only efficient if the ⁴I_{11/2} state of Erbium is low populated. Especially in high-power applications, the natural lifetime of this level appears to be too long to allow efficient pumping.

In another application known from the article "Improvement of Fluorescence Characteristics of Er³⁺-Doped Fluoride Glass by Ce³⁺ Codoping" of Z. Meng et al., Jpn. J. Appl. Phys. Vol. 38 (1999) pp. L1409-L1411, a conventional single-mode fiber made of Er³⁺-doped fluoride glass is pumped at a wavelength of 980nm. In fluoride glass the branching ration from ⁴I_{11/2} state of Er³⁺ to the ⁴I_{13/2} state of Er³⁺ is significantly lower than in silica glass. Because the decay rate of the ⁴I_{13/2} state is too low, pumping is inefficient. To overcome this, the fiber is co-doped with Ce³⁺. By co-doping Ce³⁺ the corresponding branching ration of Er³⁺ is improved via the resonance energy transfer between Er³⁺ in the ⁴I_{11/2} state and Ce³⁺ in the ⁴F_{7/2} state, since the energy difference in the lowest resonant transition of Ce³⁺ (⁴F_{7/2} → ⁴F_{5/2}) approximately coincides with that in the ⁴I_{13/2} → ⁴I_{11/2} transition of Er³⁺.

However, for high power applications in WDM (wavelength division multiplexing), especially in the co-called C-band froml 527,15nm to 1565nm and in the co-called L-band from 1565nm to 1610nm both specified by ITU-T, Er/Yb-doped double-clad fiber amplifier are preferred.

### SUMMARY OF THE INVENTION

It is therefore an object of the present invention, to provide an Er/Yb-doped double-clad optical fiber which allows more efficient pumping. Another object of the present invention is to provide an fiber optical amplifier with such a fiber.

The object is attained by a double-clad fiber containing a core having a first refractive index, an inner cladding surrounding the core and having a second refractive index lower than the first refractive index and an outer cladding surrounding the inner cladding. The core of the fiber is doped with Erbium and co-doped with Ytterbium. In addition, the core is co-doped with Cerium which enables a resonant energy transfer between the Erbium excited state and Cerium ground state and thereby increases the decay rate from Erbium ⁴I_{11/2} state to Erbium ⁴I_{13/2} state.

An advantage of the present invention is that the gain spectrum of the fiber is not diminished by the co-dopant Cerium. Another particular advantage is that the amplifier according to the invention is well suited as a booster for WDM applications in the C-band as well as in the L-band.

### BRIEF DESCRIPTION OF THE DRAWINGS

A preferred embodiment of the present invention will now be described with reference to the accompanying drawings in which
- Figure 1: shows a diagram of a fiber amplifier, and
- Figure 2: shows the energy levels and transitions of the dopants in the active core.

### DETAILED DESCRIPTION OF THE PREFERRED EMBODIMENTS

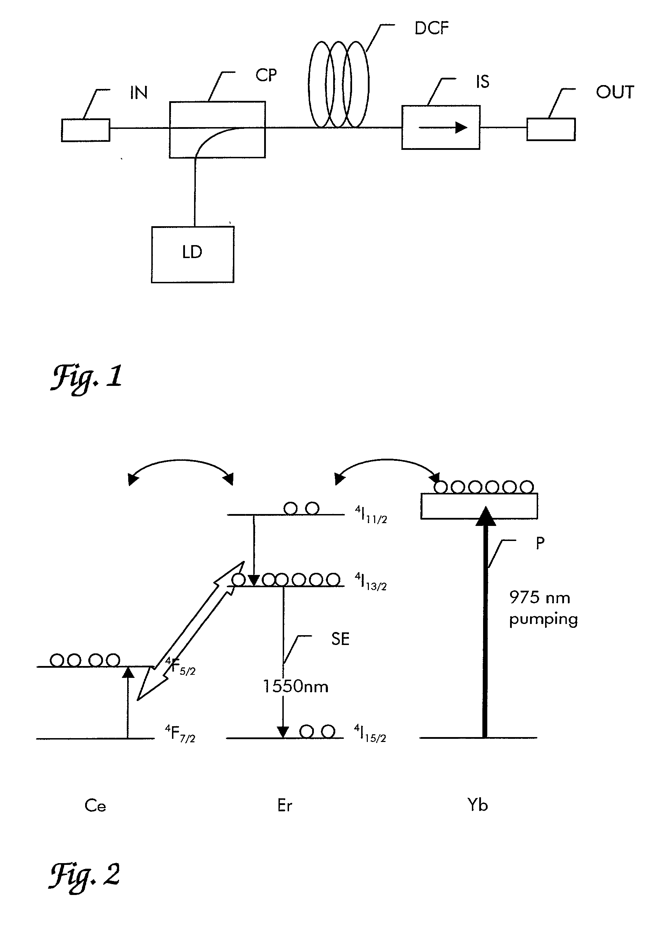

Shown in Figure 1 is a schematic diagram of a fiber amplifier which serves for amplifying optical signals, e.g., after transmission through a long length of optical transmission fiber. The signal is coupled to input IN of the amplifier. The input IN is fed via coupler CP to an amplifying double-clad fiber DCF. Also coupled to the double-clad fiber DCF via coupler CP is a pump signal from laser diode LD. At the end of the entire length of the amplifying double-clad fiber DCF is an optical isolator IS which prevents light from the opposite direction from entering the fiber, e.g., due to reflection. After the optical isolator IS, the amplified optical signal is output through output OUT.

The double-clad fiber DCF consists of an active core doped erbium (Er) and co-doped with Ytterbium (Yb) and Cerium (Ce). The core functions as a transmission medium for optical signals which propagate in a longitudinal direction along the length of the fiber. The core may be any material typically used in optical fibers, preferably silica glass, and has a first refractive index. Surrounding the core is an inner cladding layer which has a second refractive index, typically lower than that of the core. Some typical materials from which inner cladding may be made include silica glass, fluoride glass or ZBLAN. The inner cladding layer is surrounded by an outer cladding layer, which has a lower index of refraction than the inner cladding. The outer cladding may be comprised of a polymer material, as is known in the art.

The doping concentration of Erbium in the core lies between 500 and 2500 weight ppm (commonly abbreviated as ppm wt). The Ytterbium concentration is between one to 100 times the Erbium concentration. Typically, the Ytterbium concentration is between 10 to 30 times the Erbium concentration. The Cerium concentration is between one to 30 times the Erbium concentration. Typically, the Cerium concentration is about 20 times the Erbium concentration.

The inner cladding layer, being separate from the core, allows optical pumping energy to be coupled into the fiber without having to couple it into the core of the fiber itself. Laser diode LD provides a continuous optical pumping signal for example at a wavelength of 975nm. The pumping signal is fed via coupler CP into the inner cladding layer of double-clad fiber DCF. The optical pumping energy undergoes internal reflection within the inner cladding, some of the reflection resulting in pumping energy crossing into the core. The core is absorbent at the wavelength of the pumping energy. As the pumping energy is absorbed, optical signal energy is added to the optical signal propagating through the core by stimulated emission of the energy stored in the doped fiber core. Thus, the optical signal in the core is amplified from pumping of the inner cladding.

Pumping signal provided by laser diode LD has a wavelength spectrum in the range between 910nm and 1060nm. Preferably, the wavelength spectrum has a peak at either of the wavelengths 915nm, 975nm or 1060nm or has any combinations of peaks at these wavelengths. It is therefore advantageous to have as a pumping source an array of several laser diodes instead of only one laser diode. The wavelengths 915nm, 975nm or 1060nm correspond to transitions in the sub-band structure of Yb and thus make pumping most effective.

The energy levels and transitions of the active materials Yb, Er, and Ce doped into the core of double-clad fiber DCF are shown schematically in Figure 2. Indeed, optical pumping energy P at, e.g., 975 nm is in a first step absorbed by Yb ions in the core. This causes excitation of the Yb ions which is shown in the most right part of the figure. Yb can now transfer its energy to the ⁴I_{11/2} excited state of Er. Energy transfer is only efficient if the ⁴I_{11/2} excited state of Er is low populated.

Since the natural lifetime of this level is too long to achieve efficient pumping energy transfer, descexcitation of the ⁴I_{11/2} excited state of Er is achieved by the third co-dopant Cerium. Through cooperative effect, a resonant energy transfer between the Erbium excited state and Cerium ground state takes place. An Erbium ion in the ⁴I_{11/2} state transfers its energy to a neighboring Ce ion which is thereby excited from its ground state ⁴F_{7/2} to its excited state ⁴F_{5/2} and the Erbium ions desexcites into the ⁴I_{13/2} state.

Now, through first energy transfer from Yb to Er and second energy transfer from Er excited state to Ce, the Er ⁴I_{13/2} state is highly populated which leads to an inversion of the ⁴I_{13/2}/⁴I_{15/2} states. This transition is used to amplify light signals propagating through the fiber by stimulated emission at a wavelength range around 1550nm. The gain spectrum of the amplifier reaches from 1527nm to 1610nm and therefore covers the C-band as well as the L-band specified by ITU-T. This is a strong advantage of Ce as co-dopant compared to other possible co-dopants like Phosphorus which could be envisaged as second co-dopant but would reduce the gain spectrum towards shorter wavelengths. The fiber amplifier according to the inventions is therefore highly applicable for WDM applications for all wavelengths channels especially in the C-band. In particular, the amplifier according to the invention is used as a high power booster following a low noise optical pre-amplifier.

While the inventions has been described above by way of a non-limiting example, other modifications and improvements are also possible. In an advantageous improvement, the inner cladding layer of double-clad fiber DCF has a non-circular cross-section. Thus, pumping light emitted into the inner cladding would be directed through several reflections towards the fiber core and modes of propagation which do not cross the core at all are avoided. In another advantageous improvement, the inner cladding comprises several regions with locally modified refractive index as it is described in EP 1 043 816, which is hereby incorporated by reference. Such regions can for example be holes of free air space or regions doped with elements selected from the group Ge, Al, B and F. The holes or doped regions of such a "holey" fiber serve also for directing light to the fiber core and thereby increase the pumping efficiency.

## Claims

1. Rare-earth doped fiber amplifier comprising a double-clad fiber (DCF) comprising a core having a first refractive index, an inner cladding surrounding the core and having a second refractive index lower than the first refractive index and an outer cladding surrounding the inner cladding, the core being doped with Erbium (Er) and co-doped with Ytterbium (Yb), **characterized in that** the core is further co-doped with Cerium (Ce).

2. Fiber amplifier according to claim 1, further comprising a pump source (LD) coupled to the double-clad fiber (DCF) to emit pump energy (P) in the form of light into the inner cladding of the fiber.

3. Fiber amplifier according to claim 2, wherein the pump source (LD) emits light (P) in the wavelength band between 910nm and 1060nm.

4. Fiber amplifier according to claim 2, wherein the pump source emits light (P) with one or any combinations of peaks in the wavelength spectrum at either of the wavelengths 915nm, 975nm or 1060nm.

5. Fiber amplifier according to claim 1, wherein the Cerium (Ce) enables a resonant energy transfer between the Erbium (Er) excited state (⁴I_{11/2})and Cerium (Ce) ground state (⁴F_{7/2}).

6. Fiber amplifier according to claim 1, wherein the Ytterbium (Yb) enables pump energy transfer between Ytterbium (Yb) ions being in the excited state and Erbium (Er) ions being in the ground state (⁴I_{15/2}).

7. Fiber amplifier according to claim 1, wherein the fiber core is made of silica glass.

8. Fiber amplifier according to claim 1, wherein the inner cladding comprises regions with locally modified refractive index such as holes for directing light to the fiber core.

9. Fiber amplifier according to claim 1, wherein the doping concentration of Erbium (Er) in the core lies between 500 and 2500 ppm wt, the Ytterbium (Yb) concentration is between one to 100 times the Erbium (Er) concentration. and the Cerium (Ce) concentration is between one to 30 times the Erbium (Er) concentration.

10. Fiber amplifier according to claim 9, wherein the Ytterbium (Yb) concentration is between 10 to 30 times the Erbium (Er) concentration. and the Cerium (Ce) concentration is substantially 20 times the Erbium (Er) concentration.

11. Fiber amplifier according to claim 1, used as a booster at the wavelength range between 1527nm and 1565nm.

12. Fiber amplifier according to claim 11, further operable at the wavelength range between 1565nm and 1610nm.

13. Double-clad fiber (DCF) comprising a core having a first refractive index, an inner cladding surrounding the core and having a second refractive index lower than the first refractive index and an outer cladding surrounding the inner cladding, the core being doped with Erbium (Er) and co-doped with Ytterbium (Yb), **characterized in that** the core is further co-doped with Cerium (Ce).

14. Double-clad fiber (DCF) according to claim 13, wherein the Cerium (Ce) enables a resonant energy transfer between the Erbium (Er) excited state (⁴I_{11/2}) and Cerium (Ce) ground state (⁴F_{7/2}).

15. Double-clad fiber (DCF) according to claim 13, wherein the Ytterbium (Yb) enables pump energy transfer between Ytterbium (Yb) ions being in the excited state and Erbium (Er) ions being in the ground state (⁴I_{15/2}).

16. Double-clad fiber (DCF) according to claim 13, wherein the fiber core is made of silica glass.

17. Double-clad fiber (DCF) according to claim 13, wherein the doping concentration of Erbium (Er) in the core lies between 500 and 2500 ppm wt, the Ytterbium (Yb) concentration is between one to 100 times the Erbium (Er) concentration. and the Cerium (Ce) concentration is between one to 30 times the Erbium (Er) concentration.

18. Double-clad fiber (DCF) according to claim17, wherein the Ytterbium (Yb) concentration is between 10 to 30 times the Erbium (Er) concentration. and the Cerium (Ce) concentration is substantially 20 times the Erbium (Er) concentration.
